Europäisches Patentamt

European Patent Office

Office européen des brevets

(11) Publication number: **0 429 195 A2**

## EUROPEAN PATENT APPLICATION

(21) Application number: **90311860.2**

(51) Int. Cl.⁵: **G11B 33/04**

(22) Date of filing: **30.10.90**

(30) Priority: **15.11.89 GB 8925867**
       **19.05.90 GB 9011265**

(43) Date of publication of application:
      **29.05.91 Bulletin 91/22**

(84) Designated Contracting States:
      **AT BE CH DE DK ES FR GB GR IT LI LU NL SE**

(71) Applicant: **Wyatt, Peter Graham**
      **84 Bushmore Road, Hall Green**
      **Birmingham B28 9QZ(GB)**

(72) Inventor: **Wyatt, Peter Graham**
      **84 Bushmore Road, Hall Green**
      **Birmingham B28 9QZ(GB)**

(74) Representative: **Watts, Peter Graham et al**
      **Anthony Cundy & Co. 384 Station Road**
      **Dorridge**
      **Solihull West Midlands B93 8ES(GB)**

(54) **Storage cases.**

(57) A storage case for a compact audio or video disk includes a tray (10) defining a recess (11) for location of the disk (12) and detent means (23) which will releasably retain the disk (12) in the recess (11) a spring element (30) being provided to urge the disk (12) out of engagement with the detent means (23) upon release of the detent means (23).

FIG 2

EP 0 429 195 A2

# STORAGE CASES

The present invention relates to storage cases for compact audio or video disks.

Storage cases are known in which a base portion has a hinged lid with resilient catch means. A tray is provided in the base portion with a circular recess in which a disk may be located. Resilient detent means is provided at the centre of the circular recess which locates through a hole in the centre of the disk and grips the side of the hole to retain the disk in the recess.

One form of detent means comprises a series of legs arranged in angularly spaced relationship in a circle. The legs are connected at one end to the tray and extend radially inwardly towards one another. The legs are bent upwardly part way along their lengths and then back towards one another to define a central boss, which locates through a circular aperture in the centre of the disk, when the disk is located in the recess defined by the tray. The upwardly directed portions of the legs are on a diameter equal to the diameter of the aperture in the disk and are inclined slightly outwardly. The bend between the upwardly directed portions and inner ends of the legs are radiused so that a disk can be pushed over the boss and will be gripped by the legs to retain the disk in the tray. The outer ends of the legs which are connected to the tray are unsupported, so that pressure on the inner ends of the legs will deform the legs, releasing the disk so that it may be removed from the tray. In order to facilitate removal of the disk, diametrically opposed portions of the walls of the recess are left open.

With this design of detent, removal of the disk from the tray is a two handed operation, one hand being required to release the detent means while the other hand is required to lift the disk from the recess. The present invention provides an improvement to this form of storage case, which will cause the disk to disengage from the detent means when pressure is applied thereto to release the detent means thus permitting removal of the disk from the case using only one hand.

According to one aspect of the present invention, a storage case for a compact audio or video disk comprises a tray defining a recess for location of the disk and detent means which will releasably retain the disk in the recess characterised in that means is provided to apply a force to the disk urging the disk out of engagement with the detent means upon release of the detent means.

In accordance with a preferred embodiment of the invention, resilient means may be used to apply the force to the disk to urge it out of engagement with the detent means.

According to an alternative preferred embodiment of the present invention, a lever mechanism may be provided, said lever mechanism being operated simultaneously with the release mechanism of the detent means to apply a force on the disk urging it out of engagement with the detent means.

The means of the present invention of applying a force to the disk may be formed as an integral part of the tray or detent means, or may be formed separately so that it may be retrofitted to disk storage cases with suitable detent means.

Various embodiments of the invention are now described, by way of example only, with reference to the accompanying drawings, in which:

Figure 1 shows a plan view of a tray for a compact disk storage case, in accordance with the present invention;

Figure 2 shows a sectional side elevation of the tray illustrated in Figure 1;

Figure 3 shows a fragmentary plan view of a tray illustrating a modification to the tray illustrated in Figures 1 and 2;

Figure 4 shows a section along the line IV-IV of Figure 3;

Figure 5 shows a fragmentary sectional elevation of a tray, illustrating an alternative modification to the tray illustrated in Figures 1 and 2;

Figure 6 shows a view similar to Figure 1 with alternative means of applying a force to the disk, in accordance with the present invention;

Figure 7 shows a sectional side elevation of the tray illustrated in Figure 6; and

Figure 8 shows a fragmentary sectional elevation of a modification to the tray illustrated in Figure 6.

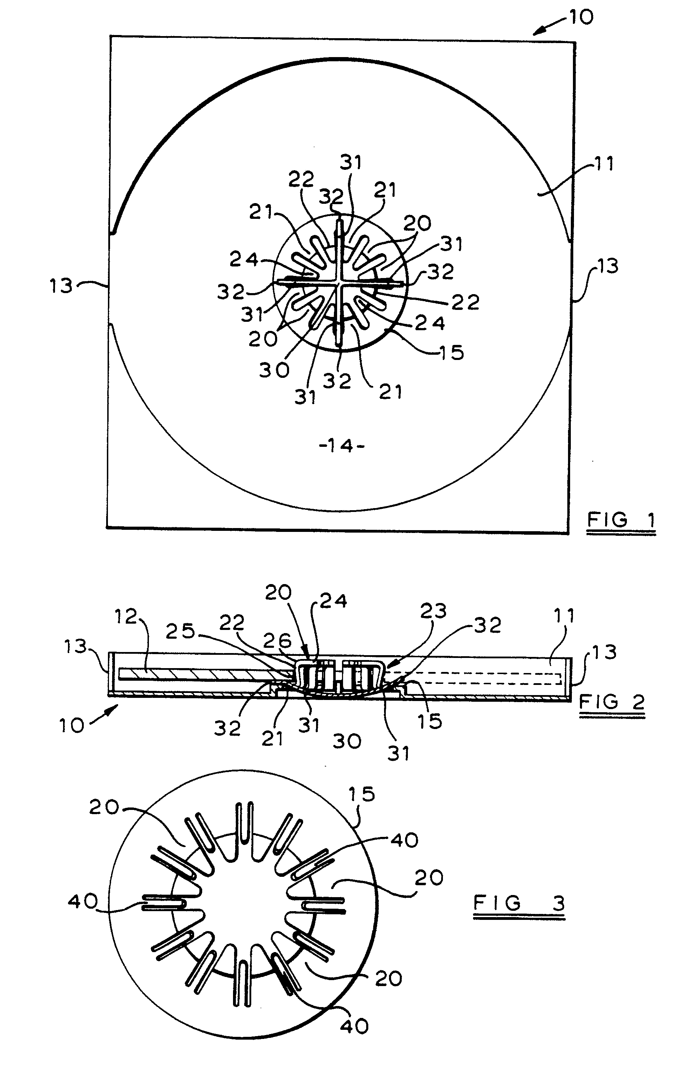

As illustrated in Figures 1 and 2, a compact disk storage case includes a tray 10 moulded from rigid plastics material. The tray 10 defines a circular recess 11 for location of a compaot disk 12, diametric portions 13 of the wall of the recess 11 being left open to provide access to the compact disk 12.

A central circular portion 15 of the base 14 of the recess 11 is raised relative to said base 14, so that when the tray 10 is resting on a supporting surface the central portion 15 will be unsupported. The central portion 15 defines a series of legs 20 arranged in angularly spaced relationship in a circle. The outer portions 21 of the legs 20 extend in the plane of the central portion 15 towards one another.

Part way along their lengths, the legs 20 are bent upwardly to provide upstanding portions 22 which define a central boss 23. The inner ends 24 of the legs 20 are then bent back towards one other.

The upstanding portions 22 of the legs 20 are on a diameter equal to the diameter of a circular aperture 25 in the centre of disk 12 and are inclined slightly outwardly, so that the central boss 23 may be located through the aperture 25 and the legs 20 will engage and grip the sides of the aperture 25, to retain the disk 12 in the recess 11. The bend 26 between the upstanding portions 22 and inner ends 24 of legs 20 is radiussed, so that the disk 12 may be pushed over the boss 23.

A spring element 30 having four arms 31 at right angles to one another, is disposed centrally of boss 23, so that the arms 31 are located through gaps between the legs 20. The arms 31 are bowed upwardly and the ends 32 of the arms 31 extend beyond the upstanding portions 22 of legs 20 and away from the upper face of the central circular portion 15 of base 14.

When a disk 12 is pushed over boss 23, the lower face thereof engages the ends 32 of the spring element 30 and deforms them downwardly towards the upper face of portion 15. The load applied to the disk 12 by the legs 20 will then hold the disk 12 down in the recess 11 against the resilient load applied thereto by deformation of the spring element 30.

When pressure is applied to the inner ends 24 of legs 20, the unsupported outer portions 21 are flexed downwardly, so that the upper ends of the inclined upstanding portion 22 move inwardly to release the disk 12. The spring element will then force the disk 12 up out of the recess 11, so that upon releasing pressure on the inner ends 24 of legs 20, the disk 12 will no longer be gripped by the legs 20 and may be removed from the recess 11.

The tray 10 described above may be located in the base portion of a case with a hinged or sliding lid. Alternatively, the tray 10 may define the base portion of the case.

The spring element 30 of the embodiment described above is formed separately of the tray 10 and may consequently be used to modify existing storage cases with the form of detent means described above. Spring element 30 may be provided with formations for engagement with corresponding formations on the legs 20, by means of which it may be located in position.

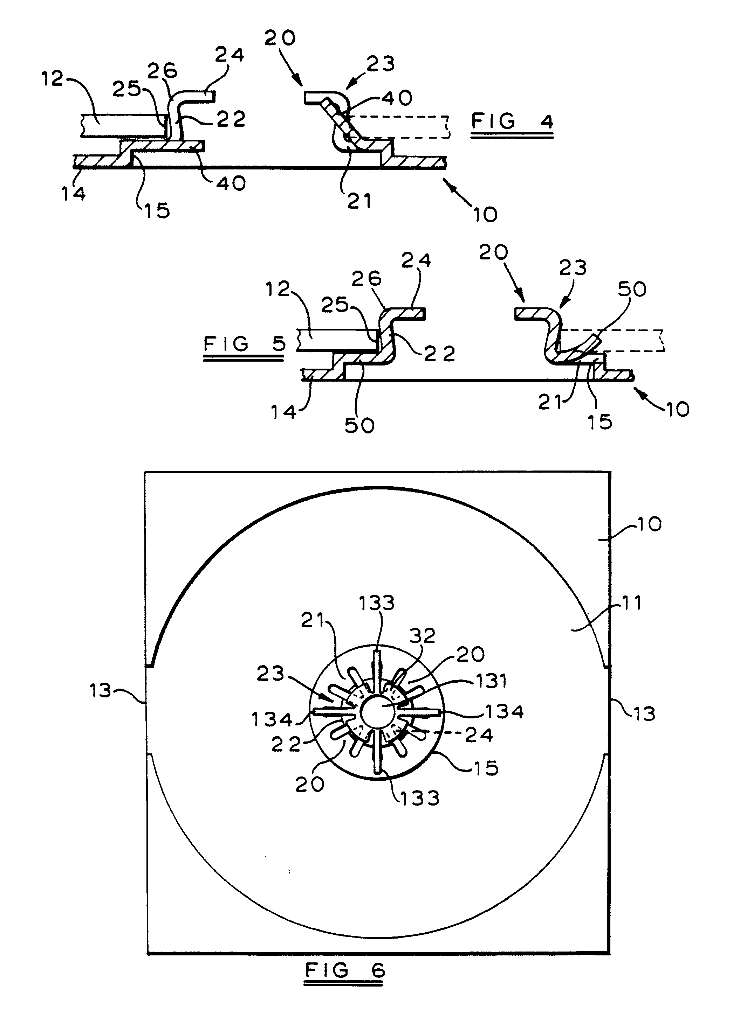

In accordance with the modification illustrated in Figures 3 and 4, the spring element 30 may be replaced by resilient fingers 40 formed integrally of the tray 10. The resilient fingers 40 which extend radially inwardly towards one another are located between the legs 20 and are bowed upwardly, so that they will be deformed downwardly to apply an upward load to the disk 12, when the disk 12 is pushed over the central boss 23 defined by legs 20.

In the alternative embodiment illustrated in Figure 5, the resilient fingers 50 are formed integrally of the tray 10, extend radially outwardly from the upstanding portions 22 of legs 20.

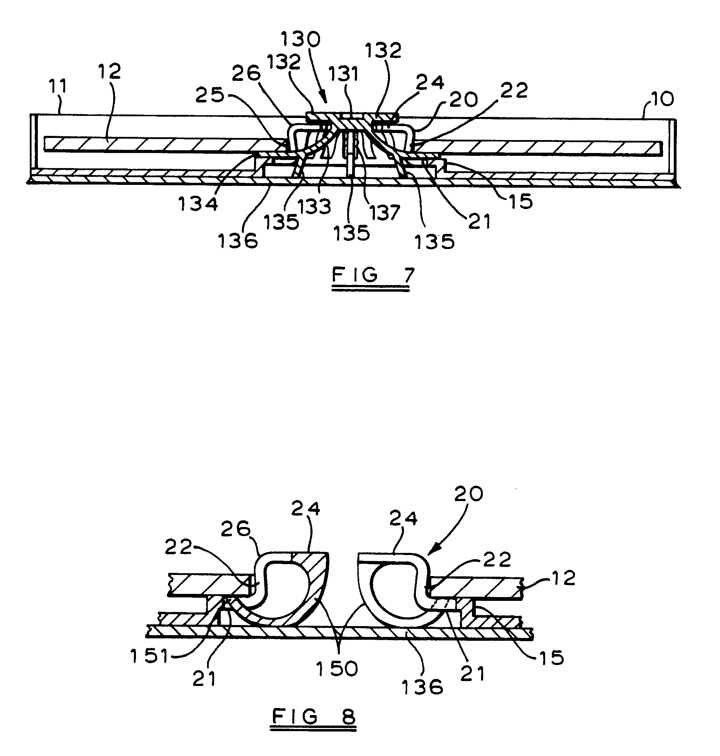

In the embodiment of the invention illustrated in Figures 6 and 7 a release element 130 comprising a central portion 131 with four ears 132 is located so that the ears 132 rest upon the inner ends 24 of the legs 20 of a tray 10. Intermediate of the ears 132, four radially extending arms 133 depend from the underside of central portion 131 and are located through the gaps between adjacent legs 20 of the tray 10. The arms 133 are curved upwardly, so that their outer ends 134 engage between the tray 10 and a disk 12 when located in the tray 10. Intermediate of the extremities of each of the arms 133, a leg 135 extends downwardly to engage an underlying surface 136. The legs 135 are inclinded from arms 133 slightly outwardly. Lugs 137 extend laterally on either side of the arms 133, to engage adjacent legs 20, to retain the release element 130 in position.

In order to release the disk 12 from the tray 10, downward pressure is applied to the central portion 131 of release element 130. This downward pressure is transmitted to the inner ends 24 of lugs 20 by ears 132 in order to release the disk 12 from the boss 23 defined by legs 20. The downward pressure on the central portion 131 of release element 130 also causes the legs 135 to slide outwardly on surface 136, causing the arms 133 to pivot upwardly and push the disk 12 off the boss 23, so that it is no longer gripped by the legs 20. Pressure may then be removed from the release element 130 and the disk 12 lifted out of the tray 10.

In the alternative embodiment illustrated in Figure 8, arms 150 are formed integrally with the legs 20, the arm 150 extending downwardly from the inner portion of the inner end 24 of one of the legs 20 into engagement with the underlying surface 136. The arm 150 then extends upwardly between the legs 20 of tray 10 so that when a disk 12 is located in the tray 10, the outer end 151 of arm 150 will be located between the tray 10 and disk 12. In similar manner to the embodiment described above, when pressure is applied to the inner ends 24 of legs 20 to release the disk 12, the outer ends 151 of arms 150 will be pivoted upwardly about the point of engagement with the surface 136, causing the disk 12 to lift off the boss 23.

The underlying surface 136 may be provided by the base portion of a case in which tray 10 is located, said case having a hinged or sliding lid. Alternatively, the tray may define the base portion of a case, surface 136 being provided by an integral portion of the tray 10 spaced from the central portion 15.

Various modifications may be made without departing from the invention. For example, while in the embodiments illustrated in Figures 1 and 2 and Figures 6 and 7, the release means have four arms, release means with more or fewer arms may be used. In the embodiments illustrated in Figures 3 to 5 and Figure 8, integral fingers 40 or arms 50 may be provided between one or more of the legs 20 of the tray 10, although a symmetrical arrangement of fingers 40 or arms 50 is preferred. Where spring elements are used to apply the force to the disk, any form of spring element which is arranged to be deformed by the disk 12 when it is located in the recess may be used. These spring elements may either be formed integrally or separately of the tray.

While the present invention has been described with reference to storage cases for compact disks, it is equally applicable to storage cases for other forms of disk or laminar articles.

## Claims

1. A storage case for a compact audio or video disk (12) comprising a tray (10) defining a recess (11) for location of the disk (12) and detent means (23) which will releasably retain the disk (12) in the recess (11), characterised in that means (30; 40; 50; 130; 150) is provided to apply a force to the disk (12) urging the disk (12) out of engagement of the detent means (23) upon release of the detent means (23).

2. A storage case according to claim 1 characterised in that the detent means (23) has a series of legs (20) which define a central boss (23), an aperture (25) in the disk (12) being adapted to engage over the central boss (23) when the disk (12) is located in the recess (11), the legs (20) gripping the sides of the aperture (25).

3. A storage case according to claim 2 characterised in that the legs (20) are defined by a central raised portion (15) of the base (14) of the recess (11), the outer portions (21) of the legs (20) extending in the plane of said central raised portion (15), the legs (20) being bent upwardly part way along their lengths to provide upstanding portions (22) and the inner ends (24) being bent back towards one another, said upstanding portions (22) being inclined slightly outwardly and a bend (26) between the upstanding portions (22) and inner ends (24) being radiused.

4. A storage case according to any one of claims 1 to 3 characterised in that resilient means (30; 40; 50) is provided to apply a load to the disk (12) urging it out of the recess (11) when the disk (12) is engaged on the detent means (23).

5. A storage case according to claim 4 characterised in that the detent means (23) comprises a central boss (23) defined by a series of legs (20), the legs (20) being adapted to engage and grip an aperture (25) in the disk (12), a spring element (30) being disposed centrally of the boss (23), said spring element (30) having a plurality of bowed arms (31) which are located through gaps between the legs (20) defining the central boss (23), the arms (31) extending beyond upstanding portions (22) of the legs (20), so that they will be engaged and deformed by a disk (12) when a disk (12) is located over the central boss (23).

6. A storage case according to claim 4 characterised in that the detent means comprises a central boss (23) defined by a series of legs (20), the legs (20) being adapted to engage and grip an aperture (25) in the disk (12), the resilient means (40; 50) being provided by a plurality of resilient fingers (40; 50) formed integrally of the tray (10).

7. A storage case according to claim 6 characterised in that the resilient fingers (40) are formed between adjacent legs (20) of the detent means (23), said resilient fingers (40) extending radially inwardly and being bowed upwardly so that they will be engaged and deformed by a disk (12) as the disk (12) is located over the central boss (23).

8. A storage case according to claim 6 characterised in that the resilient fingers (50) extend radially outwardly from upstanding portions (22) of the legs (20) defining the central boss (23), the resilient fingers (50) being bowed upwardly so that they will be engaged and deformed by the disk (12) as it is located over the central boss (23).

9. A storage case according to any one of claims 1 to 3 characterised in that the means (130; 150) for applying the load to the disk (12) comprises a lever mechanism (133, 134, 130; 100), the lever mechanism (133, 134, 135; 100) being operated by means (131; 24) for releasing the detent means (23).

10. A storage case according to claim 9 characterised in that the detent means is defined by a central boss (23) formed by a series of legs (20), a lever (133; 150) is associated with the inner end (24) of at least one of the legs (20) defining the central boss (23), the lever (133; 150) extending downwardly from an inner end (24) of the leg (20) to engage an underlying surface (136) and then upwardly between adjacent upstanding portions (22) of the legs (20) of the central boss (23).

11. A storage case according to claim 10 characterised in that a plurality of levers (133; 150) are located symmetrically with respect to the central boss (23).

12. A storage case according to claim 11 characterised in that the levers (133) are provided on a release element (130), the release element (130) comprising a central portion (131) which overlies and engages inner ends (24) of the legs (20) defining the central boss (23), the levers (133) depending from the central portion (131) and being located between adjacent legs (20) of the central boss (23).

13. A storage case according to claim 11 characterised in that the levers (150) are formed as an integral part of the legs (20) defining the central boss (23), the levers (150) extending from inner ends (24) of said legs (20).

14. A storage case according to any one of the preceding claims characterised in that the tray (10) is located in a case with a hinged or sliding lid.

15. A storage case according to any one of claims 1 to 13 characterised in that the tray (10) defines the base portion of a case, the tray (10) being provided with a hinged or sliding lid.

FIG 1

FIG 2

FIG 3

FIG 4

FIG 5

FIG 6

FIG 7

FIG 8